# EUROPÄISCHE PATENTSCHRIFT

(11) **EP 0 988 925 B1**
(45) Veröffentlichungstag und Bekanntmachung des Hinweises auf die Patenterteilung: **05.12.2001**
(21) Anmeldenummer: 98203072.8
(22) Anmeldetag: 12.09.1998
(51) Int. Cl.: B23Q 7/14, A63H 29/22

(54) **Werkstückträger mit Speicherantrieb**
Workpiece carrier with energy storing device
Support porte-pièces avec dispositif d'entraînement avec accumulation d'énergie

(43) Veröffentlichungstag der Anmeldung: 29.03.2000
(60) Teilanmeldung: 00119382.0
(73) Patentinhaber: Bucher, Urs, 6064 Kerns (CH)
(72) Erfinder: Bucher, Urs, 6064 Kerns (CH)
(74) Vertreter: Arato, Laszlo

(56) Entgegenhaltungen:
- EP-A- 0 264 532
- WO-A-98/04330
- DE-A- 3 103 676
- DE-A- 4 014 696
- GB-A- 2 089 541
- US-A- 5 658 120
- US-A- 5 767 655
- PATENT ABSTRACTS OF JAPAN vol. 17, no. 376 (C-1084), 15. Juli 1993 & JP 05 064690 A (BANDAI CO LTD), 19. März 1993

## Beschreibung

Die Erfindung betrifft ein autonomer Werkstückträger mit Speicherantrieb gemäss dem Oberbegriff des Anspruchs 1.

Werkstückträger transportieren Werkstücke auf den Transferstrassen von Arbeitsstation zu Arbeitsstation der vorzugsweise automatisierten Fertigung. Den Transport der Werkstückträger ohne Antrieb übernehmen zirkulierende Bänder oder Ketten von einem zentralen Transmissionsantrieb, der ständig und gleichförmig betrieben wird. Weil diese Lösung viele Nachteile hat, benützt die Fertigung seit geraumer Zeit selbstfahrende elektrische Werkzeugträger mit externer oder interner Stromversorgung, also Stromschienen und Stromabnehmer oder mitfahrende als Sekundärelemente bezeichnete Traktionsbatterien, wie z.B. aus Dokument DE-A-4014696 bekannt. Dank dem Vorteil dieser Systeme ist der autonome Transport von Werkstücken im Bereich ab ca. 50 bis 2000 kg gedeckt. Solche Werkstückträger verkehren eigenständig, laut- und schienenlos von Arbeitsstation zu Arbeitsstation. Das Sekundärelement deckt den Energiebedarf der Werkstückträger für 2 bis 5 Tage. Danach fahren die Werkstückträger zur Ladestation, wo ihre Akkumulatoren über Nacht oder am Wochenende aufgeladen werden. Auf diese Art wird im Automobilwerk die Montage von Baugruppen wie Motorblock und Karosserie aber auch der Zusammenbau von Fahrzeugen betrieben. Die Verwendung dieser Technik für Werkstückgewichte unter 50 kg vermochte sich für Transferstrassen nicht zu etablieren, obwohl es an Bedarf nicht mangelt. Ein Grund dafür ist das Missverhältnis der Gesamtstrecke und der Anzahl der Haltestellen und der kurzen Verweilzeit an der Station, und dass die hohen Beschleunigungen der Werkstückträger massive Ansprüche an den Energiehaushalt der Batterien sowie hohen Energiekonsum und hohe Entlade- und Ladesequenzen (aus Bremsstrom und Nachladen an der Station) ergeben, die die handelsüblichen Akkumulatoren überfordern. Ein Grund dieser Überforderung liegt in der kurzen Ladezeit und der daraus resultierenden Häufigkeit der Ladezyklen, die die handelsüblichen Akkumulatoren, wegen der Reduktion der Lebensdauer, nicht durchhalten können. Je nach Akkumulator-Typ muss auch dafür gesorgt werden, dass der Akku vor dem Aufladen, wegen des Memory-Effekts, ganz entladen wird. Aus diesen Umständen folgt, dass der Akkumulator eines Selbstfahrantriebes die Energie für mehrere hundert Fahrten speichern muss, damit die Anzahl der Ladezyklen soweit verringert wird, dass sich der Einsatz rechtfertigen lässt. Da die Akkumulatoren für mehrere hundert Fahrten zu schwer sind, scheiterten alle Bemühungen am Aufwand und Nutzen
(Gesamtgewicht/Nutzlast) für deren Einsatz.

Zweck der Erfindung ist somit ein Werkstückträger mit Speicherantrieb, der eine Fahrstrecke von ca. 2 m so zurücklegt, dass zum Laden der benötigten Energie an der Station weniger als 1 Sekunde Verweilzeit ausreicht und, dass die gespeicherte Energie zum Weiterfahren auch nach mindestens einem Stopp und/oder Warten von einigen Tagen auf der Fahrtstrecke genügt, um Betriebsunterbrüche der Anlage (Erweiterung, Betriebsstörung, Reparatur) tolerieren zu können.
Die vorliegende Erfindung gilt daher einem selbstfahrenden Werkstückträger, dessen Energiehaushalt eine einzige kurze Streckensequenz deckt, kurzes Verweilen an einer Station erlaubt und dabei mit ausreichender Sicherheit ausgelegt ist.

Die Lösung dieser Aufgabe erfolgt gemäss dem Merkmal der Patentansprüche 1 - 3.

Der Vorteil der vorgeschlagenen Lösung ist, dass für den unteren Anwendungsbereich, womit die Nutzlast von weniger als 5 kg gemeint ist, eine taugliche Antriebstechnik für selbstfahrende autonome Werkstückträger geboten wird. Die Lade- und Entladezyklen im Normalbetrieb (welcher 98 % aller Fälle ausmacht) können die vorgeschlagenen Kondensatoren übernehmen, weil sich die Kondensatoren sehr schnell aufladen lassen und dafür bestens geeignet sind. Die Kondensatoren speichern somit die Energie für eine einzige Sequenz einer Fahrstrecke und somit von einer Station bis zum nächsten, da sie jedesmal in eine Station gelangen, wo sie vor dem Start aufgeladen werden. Die Baugrösse eines Kondensator-Speichers ist trotz geringerer Energiedichte kleiner als die Baugrösse der Lösung eines Speichers mit Akkumulator. Die vorgeschlagene Erfindung benützt für den Notbetrieb, je nach Pflichtenheft, wahlweise einen zusätzlichen Kondensatorspeicher oder einen Akkumulator. Im Notbetrieb, was höchst selten vorkommt, wird die nächste Station im Kriechgang angefahren. Somit kann der Speicherakkumulator für den Notbetrieb entsprechend klein ausgelegt werden. Weil ein Speicherakkumulator nur sehr selten benutzt und darum selten geladen wird, wird seine Lebensdauer gegenüber einem Akku-Speicher, der den Normalbetrieb gewährleisten sollte, um Faktoren verlängert. Für die vorgeschlagene Lösung der Steuerung eignen sich Mikrokontroller, die neben dem Mikroprozessor, die nötigen Speicherbausteine (RAM, ROM, EEPROM etc.) und Komponenten zur direkten Ansteuerung der Peripherie (analoge und digitale Ein- und Ausgänge, Zähler, Spannungsüberwachungen etc.) im Baustein selbst enthalten, wie die 68HC08/C11/C12/C16 Familien der Firma Motorola oder die ST6, ST7 der Firma Thomson, sowie Derivate dieser Bausteine, die bereits auf den Batteriebetrieb optimiert sind und im Standby-Zustand fast ohne Leistung auskommen.

Nachfolgend wird als Ausführungsbeispiel ein Werkstückträger mit Speicherantrieb und Schienenführung, mit dem Grundriss von 160 x 160 mm, einer Nutzlast von 1,5 kg und einer Gesamtmasse von 2,5 kg erörtert, der für eine maximale Fahrstrecke von 10 m bei 12 m/min Höchstgeschwindigkeit, eine maximale Beschleunigung von 0,6 m/s², bei ca. 4.0 W/s Energie und eine theoretische Motorleistung von 1,2 W ausgelegt ist und mit einem Motor mit 3,0 W ausgerüstet ist und als Steuerung über einen Mikrokontroller L9942 der Firma Thomson verfügt. Der Mikrokontroller erledigt die Regelung des Antriebsmotors und somit das Abarbeiten eines Regelalgorhythmus innert nützlicher Zeit. Er ist auf Spannungsschwankungen unempfindlich, verbraucht im Standby nur ca. 70 µA und verfügt über eine integrierte Endstufe und eine (H-Brücke für max. 7 A) für den Motor und eine Schnittstelle (CAN) für die Kommunikation. Der L9942 allein ist imstande, das Energiemanagement (Überwachen, Umschalten, Laden der Energiespeicher) und die Steuerung und Regelung des Fahrbertriebes einwandfrei zu erledigen.

Die
- Fig.1: zeigt die Ansicht des Werkstückträgers und
- Fig. 2: das Blockschema des kompletten Speicherantriebes.

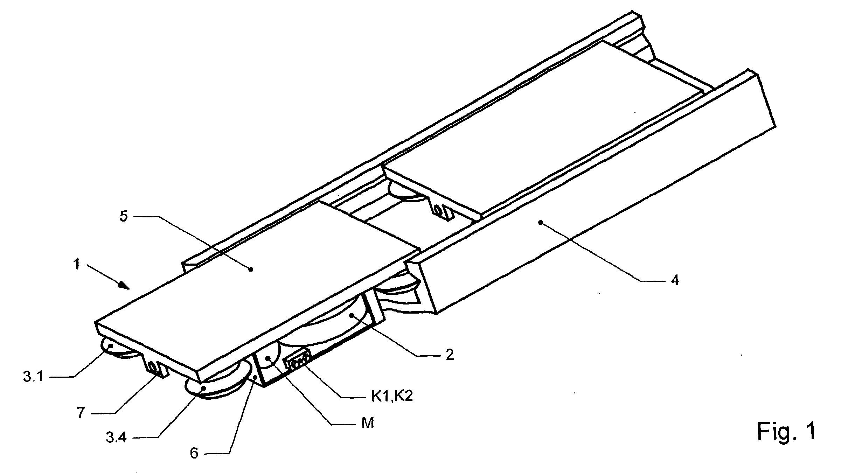

Der in Figur 1 dargestellte Werkstückträger 1 fährt auf Führungsrädern 3.1 bis 3.4 auf der Schiene 4 und befördert (irgendwelche, positionierte und fixierte, aber nicht gezeigte) Werkstücke auf ihrer Ladefläche 5 zur Bearbeitung oder Ergänzung. Der Antrieb des Werkstückträgers erfolgt mit Motor M und Reibrad 2. Die Bearbeitung oder Ergänzung mit anderen Werkstücken wird in Arbeitsstationen erledigt, die ausserhalb der Darstellung und entlang der Schiene 4 liegen und Start-und Zielorte der Werkstückträger 1 sind. Der Werkstückträger 1 ist mit einem Speicherantrieb 6, einer Kontaktstelle K1, sowie Positionierhilfen K2 wie Abstand-Sensor 7 und (nicht gezeigten) Andockstellen zur Positionierung und Indexierung der Werkstückträger ausgerüstet.

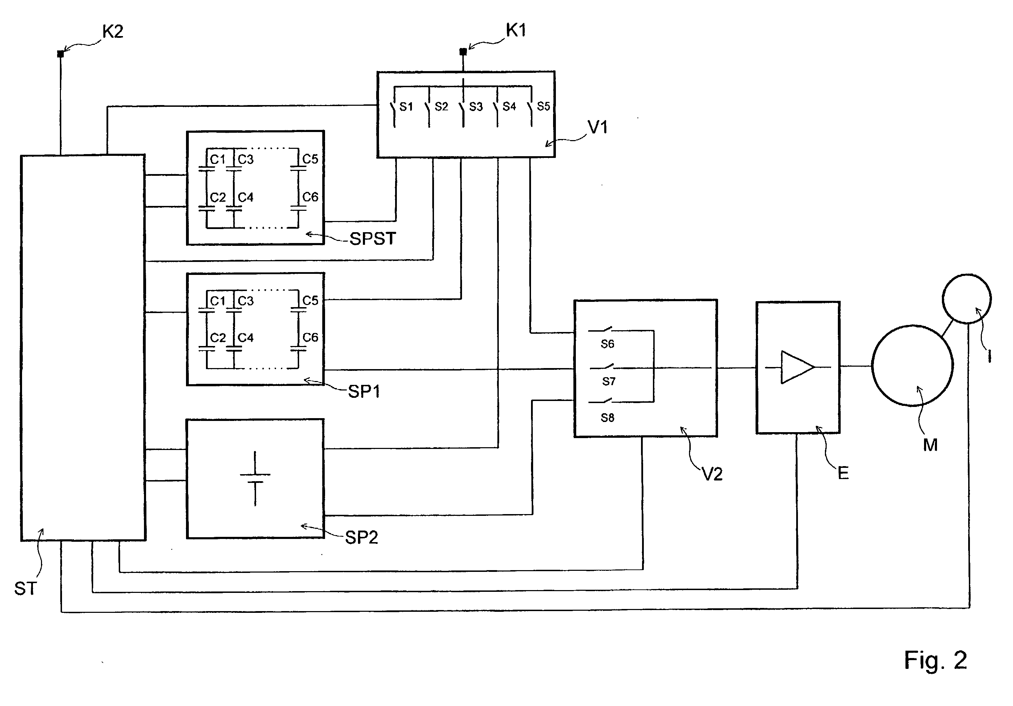

Figur 2 zeigt das Blockschema eines kompletten Speicherantriebes mit der Steuerung ST, den Verteilern V1 und V2, den Energiespeichern SPST,SP1,SP2, der Endstufe E und dem DC-Motor M mit Inkrementalgeber I. Die Aufgabe der Steuerung ST ist
- die Überwachung der Energiespeicher SPST, SP1 und SP2
- die Regelung der Fahrt des Werkstückträgers und somit die Auswahl des Energiespeichers, Bestimmung der Fahrgeschwindigkeit (Kriechfahrt, geregeltes Fahren etc.) nach dem Energiegehalt der Speicher.
- die Regelung des Ladevorgangs der Energiespeicher in den Stationen.
- die Ausregelung der Position in den Stationen.
- das Überwachen und Auswerten der Sensoren (z.B. Abstandsensor, Nothaltsensor etc.) und die
- Kommunikation zur übergeordneten Steuerung (Leitrechner) in den Stationen.

Für die Lösung dieser Aufgaben der Steuerung eignen sich Mikrokontroller, die neben dem Mikroprozessor, die nötigen Speicherbausteine (RAM, ROM, EEPROM etc.) und Komponenten zur direkten Ansteuerung der Peripherie (analoge und digitale Ein- und Ausgänge, Zähler, Spannungsüberwachungen etc.) im Baustein enthalten.

Beim Start steht der Werkstückträger 1 in der Arbeitsstation und durch die Kontaktstelle K1 fliesst Energie aus einer Stromquelle der Arbeitsstation. Die externe Energie strömt durch den Verteiler V1 als Verbrauchsenergie durch den Schalter S2 in die Steuerung ST, durch den Schalter S5 des Verteilers V1 zum Schalter S6 des Verteilers der internen Energie V2 und von dort durch die Endstufe V1 zum Antriebsmotor M. Die Endstufe E wird direkt versorgt, damit die Position im Stillstand mit externer Energie ausgeregelt werden kann. Die Ladeenergie gelangt durch den Schalter S1 des Verteilers V1 in die Speichersteuerung SPST und durch den Schalter S3 in den Fahrbetriebsspeicher SP1, sowie durch den Schalter S4 des Verteilers V1 in den Notbetriebsspeicher SP2. Die Steuerung ST regelt den Ladevorgang der Energiespeicher in den Arbeitsstationen und verteilt die Energie auf die Kondensatoren C1-C6 des Steuerungsspeichers SPST, den Fahrbetriebsspeichers SP1 und des Notbetriebsspeichers SP2. In dem Steuerungsspeicher SPST sind sechs Kondensatoren von je 1.5 F, die, um die Betriebsspannung zu erreichen, parallel und seriell geschaltet sind und auf je 2,3 V aufgeladen werden, was eine Leerlaufspannung von 4,6 V ergibt. Da der Fahrbetriebsspeicher SP1 im Fahrbetrieb stark geleert wird, ist die Betriebsspannung zeitweise tiefer als die zulässige Betriebsspannung der Steuerung ST. Deshalb ist die Speichersteuerung ST mit einem eigenen Steuerung SPST versorgt. Der Fahrantriebspeicher SP1 besteht aus Kondensatoren, die, um die Kapazität und die Betriebsspannung zu erreichen, analog dem Steuerungspeicher SPST aufgebaut und ausgelegt sind. Im Fahrbetrieb wird der Fahrbetriebsspeicher bis auf 1,5 V entladen, um die nötige Energie für den Antriebsmotor M zu liefern. Der Speicher für den Notbetrieb besteht aus einem handelsüblichen Akkumulator oder einer Batterie. Wenn der Fahrbetriebsspeicher SP1 und oder der Steuerungspeicher SPST entladen sind, wird auf den Notbetriebsspeicher SP2 umgeschaltet. Der Ladevorgang dauert so lange, bis die Speicher SPST, SP1 und SP2 wieder voll sind. Da die Speichersteuerung SPST und der Fahrbetriebsspeicher SP1 mit Kondensatoren realisiert sind, ist der Ladevorgang sehr schnell und verzögert den Aufenthalt des Werkstückträgers in der Arbeitsstation keinesfalls. Der Steuerung ST des Werkstückträgers 1 ist vorteilhafterweise ein Abstandsensor 7 überlagert, so dass die Gefahr des Auffahrens auf Hindernisse und des Auffahrens bei Stau verhindert und die Dauer des Staus überwacht wird.

Im Fahrbetrieb schaltet die Steuerung ST den Schalter S7 des Verteilers V2 ein, so dass Energie aus dem Fahrbetriebsspeicher SP1 zur Endstufe V1 fliesst, die von der Steuerung ST, gemäss Rückmeldung des Inkrementalgebers I, nach dem aktuellen Weg bzw. der Geschwindigkeit und den Vorgaben des Antriebsmotors M ausgeregelt wird.

Fahrbetrieb mit Notspeicher folgt, wenn der Fahrbetriebsspeicher SP1 und/oder der Steuerungspeicher SPST erschöpft sind. Die Energieversorgung wird unter solchen Umständen vom Notbetriebsspeicher SP2 übernommen, indem im Verteiler V2 der Schalter S7 geöffnet und der Schalter S8 geschlossen wird. Wenn der Fahrbetriebsspeicher SP1 leer ist, schaltet die Steuerung ST das Fahrprofil auf Kriechgang. Damit wird der Notbetriebsspeicher SP2 geschont und gewährleistet, dass die jeweilige Ziel-Station aus eigener Kraft erreicht wird.

## Patentansprüche

1. Werkstückträger (1) mit elektrischem Speicherantrieb (6) und einer Ladefläche (5), sowie mindestens einem Rad (3), das von einem Elektromotor (M) angetrieben wird, **dadurch gekennzeichnet, dass** der Elektromotor (M) mit der Kapazität eines elektrischen Kondensators (C) betrieben und die Kapazität des Kondensators nach Entnahme der elektrischen Energie wieder geladen wird, so dass der Kondensator (C) als Sekundärelement und somit als Speicher (SPn) der elektrischen Energie dient.

2. Werkstückträger (1) nach Anspruch 1 **dadurch gekennzeichnet, dass** mehrere elektrische Kondensatoren (C1, Cn) als Sekundärelement verwendet werden, und dass die Kondensatoren miteinander verbunden sind und als Verbund einen Speicher (SPn) für elektrische Energie bilden.

3. Werkstückträger (1) nach Anspruch 2 **dadurch gekennzeichnet, dass** die verwendeten Kondensatoren (C1, Cn) miteinander in Serie verbunden sind.

4. Werkstückträger (1) nach Anspruch 2 **dadurch gekennzeichnet, dass** die verwendeten Kondensatoren (C1 - Cn) miteinander parallel verbunden sind.

5. Werkstückträger (1) nach Anspruch 2 **dadurch gekennzeichnet, dass** die verwendeten Kondensatoren (C1 - Cn) miteinander seriell und parallel verbunden sind.

6. Werkstückträger (1) nach Anspruch 2 bis 5 **dadurch gekennzeichnet, dass** die Kondensatoren (C1 - Cn) mindestens zwei getrennte Speicher SP1, SPn bilden und dass mindestens einer der Speicher SP ausschliesslich zur Versorgung der Steuerung ST dient.

7. Werkstückträger (1) nach den Ansprüchen 1 bis 6 **dadurch gekennzeichnet, dass** neben mindestens einem Speicher SP1 mit Kondensator(en) (C), ein Speicher SP2 aus elektrolytischem Sekundärelement besteht.

8. Werkstückträger (1) nach den Ansprüchen 1 bis 7 **dadurch gekennzeichnet, dass** die Welle des Elektromotors M mechanisch mit einem Inkrementalgeber (I) verbunden ist.

9. Werkstückträger (1) nach den Ansprüchen 1 bis 7 **dadurch gekennzeichnet, dass** Funktion der elektrischen Komponenten des Werkstückträgers (1) von einer Steuerung (ST) gesteuert wird.

10. Werkstückträger (1) nach den Ansprüchen 1 bis 8 **dadurch gekennzeichnet, dass** die Funktion der elektrischen Komponenten des Werkstückträgers (1) von einer Steuerung (ST) geregelt wird.

## Claims

1. A workpiece carrier (1) having an electric energy storage mechanism (6) and a charging face (5) as well as at least one wheel (3) which is driven by an electric motor (M), **characterised in that** the electric motor (M) is operated by the capacitance of an electric capacitor (C) and the capacitance of the capacitor is re-charged after removal of the electrical energy, so that the capacitor (C) serves as a secondary cell and thus as a storage device (SPn) for the electrical energy.

2. A workpiece carrier (1) according to Claim 1, **characterised in that** a plurality of electric capacitors (C1, Cn) are used as a secondary cell, and **in that** the capacitors are mutually connected and, interconnected, form a storage device (SPn) for electrical energy.

3. A workpiece carrier (1) according to Claim 2, **characterised in that** the capacitors (C1, Cn) used are mutually connected in series.

4. A workpiece carrier (1) according to Claim 2, **characterised in that** the capacitors (C1 - Cn) used are mutually connected in parallel.

5. A workpiece carrier (1) according to Claim 2, **characterised in that** the capacitors (C1 - Cn) used are mutually connected in series and in parallel.

6. A workpiece carrier (1) according to Claims 2 to 5, **characterised in that** the capacitors (C1 - Cn) form at least two separate storage devices SP1, SPn and **in that** at least one of the storage devices SP serves exclusively for supplying the control means ST.

7. A workpiece carrier (1) according to Claims 1 to 6, **characterised in that**, in addition to at least one storage device SP1 having capacitor(s) C, there is a storage device SP2 comprising an electrolytic secondary cell.

8. A workpiece carrier (1) according to Claims 1 to 7, **characterised in that** the shaft of the electric motor (M) is mechanically connected to an incremental encoder (I).

9. A workpiece carrier (1) according to Claims 1 to 7, **characterised in that** a control means (ST) controls the function of the electric components of the workpiece carrier (1).

10. A workpiece carrier (1) according to Claims 1 to 8, **characterised in that** a control means (ST) regulates the function of the electric components of the workpiece carrier (1).

## Revendications

1. Porte-outil comportant un dispositif d'entraînement électrique à accumulation (6) et une surface de chargement (5), ainsi qu'au moins une roue (3), qui est entraînée par un moteur électrique (M), **caractérisé en ce que** le moteur électrique (M) est entraîné par la capacité d'un condensateur électrique (C), et la capacité du condensateur est rechargée après le prélèvement de l'énergie électrique de sorte que le condensateur (C) est utilisé comme élément secondaire et par conséquent en tant qu'accumulateur (SPn) de l'énergie électrique.

2. Porte-outil selon la revendication 1, **caractérisé en ce que** plusieurs condensateurs électriques (C1, Cn) sont utilisés en tant qu'élément secondaire, et que les condensateurs sont reliés entre eux et forment, en tant qu'ensemble composite, un accumulateur (SPn) pour l'énergie électrique.

3. Porte-outil selon la revendication 2, **caractérisé en ce que** les condensateurs utilisés (C, Cn) sont reliés entre eux en série.

4. Porte-outil selon la revendication 2, **caractérisé en ce que** les condensateurs utilisés (C, Cn) sont reliés entre eux en parallèle.

5. Porte-outil selon la revendication 1 ou la revendication 2, **caractérisé en ce que** les condensateurs utilisés (C1-Cn) sont reliés entre eux entre série et en parallèle.

6. Porte-outil (1) selon les revendications 2 à 5, **caractérisé en ce que** les condensateurs (C1-Cn) forment au moins deux accumulateurs séparés (SP1, SPn) et qu'au moins l'un des deux accumulateurs (SP) est utilisé exclusivement pour l'alimentation de l'unité de commande (ST).

7. Porte-outil (1) selon la revendication 1 à 6, **caractérisé en ce qu'**en dehors d'au moins un accumulateur (SP1) comportant un ou des condensateurs (C), il existe un accumulateur (SP2) formé par un élément secondaire électrolytique.

8. Porte-outil (1) selon les revendications 1 à 7, **caractérisé en ce que** l'arbre du moteur électrique (M) est relié mécaniquement à un générateur incrémental (I).

9. Porte-outil (1) selon les revendications 1 à 7, **caractérisé en ce que** la fonction des composants électriques du porte-outil (1) est commandée par une unité de commande (ST).

10. Porte-outil (1) selon les revendications 1 à 8, **caractérisé en ce que** le fonctionnement des composants électriques du porte-outil (1) est réglé par une unité de commande (ST).
